# FASCICULE DE BREVET EUROPEEN

(11) **EP 1 041 467 B1**
(45) Date de publication et mention de la délivrance du brevet: **05.11.2003**
(21) Numéro de dépôt: 00400705.0
(22) Date de dépôt: 14.03.2000
(51) Int. Cl.: G04G 1/00

(54) **Procédé et dispositif de sauvegarde de l'heure dans un dispositif garde-temps tel qu'un téléphone mobile**
Verfahren und Vorrichtung zur Zeitsicherung in einem zeithaltenden Gerät wie ein tragbares Telefon
Method and device for saving the time in a timekeeping apparatus such as a mobile telephone

(30) Priorité: 16.03.1999 FR 9903223
(43) Date de publication de la demande: 04.10.2000
(73) Titulaire: SAGEM S.A., 75015 Paris (FR)
(72) Inventeur: Romao, M. Fernando, 78360 Montesson (FR)
(74) Mandataire: Schmit, Christian Norbert Marie

(56) Documents cités:
- DE-A- 19 500 679
- PATENT ABSTRACTS OF JAPAN vol. 007, no. 256 (P-236), 15 novembre 1983 (1983-11-15) & JP 58 140668 A (HITACHI SEISAKUSHO KK), 20 août 1983 (1983-08-20)

## Description

La présente invention a pour objet un procédé de sauvegarde de l'heure dans un téléphone mobile. Elle a aussi pour objet un dispositif permettant une mise en oeuvre du procédé de l'invention. Elle trouve plus particulièrement son application dans le domaine de la téléphonie mobile. Elle pourrait tout aussi bien s'appliquer à d'autres domaines dans lesquels on trouve des systèmes comportant une horloge tels que, par exemple, dans des ordinateurs. Le but de l'invention est d'assurer, lors d'une coupure d'alimentation de l'horloge, une sauvegarde de l'heure et ce pour un faible coût. De plus, avec l'invention on diminue un encombrement du téléphone mobile. Une coupure d'alimentation se produit lorsqu'un utilisateur éteint son téléphone mobile ou qu'il enlève un dispositif d'alimentation du téléphone mobile hors de son logement.

Dans l'état de la technique, un téléphone mobile muni d'une horloge comporte un condensateur (ou une pile) connecté à une entrée d'alimentation de l'horloge. Ainsi, lors d'une coupure de l'alimentation de l'horloge, on maintient cette dernière active grâce au condensateur. Une durée de décharge de ce condensateur détermine une durée de sauvegarde de l'horloge du téléphone mobile. Une durée de sauvegarde dépend directement d'une valeur de capacité du condensateur. De plus, un courant consommé par l'horloge impose, pour une durée de sauvegarde donnée, une valeur de capacité du condensateur. Généralement, cette valeur de capacité est supérieure à 1 millifarad. De telles valeurs de capacité se traduisent par des condensateurs dont un volume devient rapidement important.

Une telle réalisation présente des problèmes. En effet, les condensateurs employés présentent un encombrement difficilement acceptable par rapport à l'utilisation qui en est faite. Cet encombrement est directement lié à un courant consommé par l'horloge du téléphone mobile et par une durée maximale de sauvegarde que l'on veut obtenir, en général quelques minutes. De plus, avec de telles valeurs de capacité le condensateur employé est un condensateur dit chimique. Un condensateur chimique est un condensateur polarisé. Lors d'un montage de ce dernier, généralement sur un circuit imprimé, il faut veiller à ne pas inverser une polarisation de ce dernier. Ceci implique des contrôles supplémentaires lors de la réalisation du téléphone mobile.

On connaît également, dans l'état de la technique, la demande de brevet DE 195 00 679A (D1) et le brevet japonais publié sous le numéro 58 140668.

D1 divulge notamment un procédé de commande de minuteurs, qui peuvent être utilisés par exemple dans des ventilateurs, des volets roulants ou des minuteries de lumière d'escalier. Elle permet, en cas de panne du réseau électrique, de ne pas perdre une information de temps écoulé depuis la panne du réseau électrique, et de pouvoir reprendre le décompte de la minuterie comme s'il n'y avait pas eu de coupure de courant.

Cependant, dans D1, on ne prévoit pas une opération d'étalonnage afin de faire correspondre avec une grande précision des durées de décharge d'un condensateur et des valeurs de tension aux bornes du condensateur.

La présente invention se propose de remédier à ces problèmes. En effet, lors d'une coupure de l'alimentation, on sauvegarde une information relative à une heure indiquée par l'horloge et on désactive cette dernière. La sauvegarde est réalisée dans un registre de sauvegarde. De plus, pour assurer une mise à jour de l'horloge, lors d'un rétablissement de l'alimentation, on mesure une durée de la coupure d'alimentation. Ce condensateur a pour fonction, d'une part, de permettre de mesurer une durée d'une coupure de l'alimentation et d'autre part de fournir une alimentation temporaire au registre de sauvegarde.

Le condensateur de l'invention a pour valeur de capacité une valeur inférieure à la valeur de capacité du condensateur utilisé pour maintenir l'horloge active. En effet, une consommation du registre de sauvegarde, de l'ordre de quelques dizaines de nanoampères, est très inférieure à une consommation de l'horloge, quelques dizaines de microampères. Ainsi, pour une durée de sauvegarde égale à la durée de sauvegarde dans l'état de la technique on a un condensateur dont une valeur de capacité est plus faible, par exemple de l'ordre de quelques microfarads.

En outre des valeurs de capacité utilisées dans l'invention sont telles que des condensateurs non polarisés, par exemple de type céramique, sont suffisants. Ainsi, avec l'invention un prix de revient et un encombrement du téléphone mobile sont réduits. De plus, le condensateur étant non polarisé, un contrôle relatif au branchement de ce condensateur sur un circuit imprimé du téléphone mobile est inutile.

La présente invention concerne donc un procédé de sauvegarde de l'heure dans un dispositif garde-temps, P. ex. un téléphone mobile, dispositif d'alimentation selon le préambule et la partie caractérisante de la revendication 1.

Elle concerne aussi un dispositif garde-temps, P. ex un téléphone mobile, comportant une horloge pour la mise en oeuvre de ce procédé et conforme à la revendication 6.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un téléphone mobile selon l'invention ;
- Figure 2 : Une représentation sous une forme d'un algorithme d'un fonctionnement du procédé de l'invention.

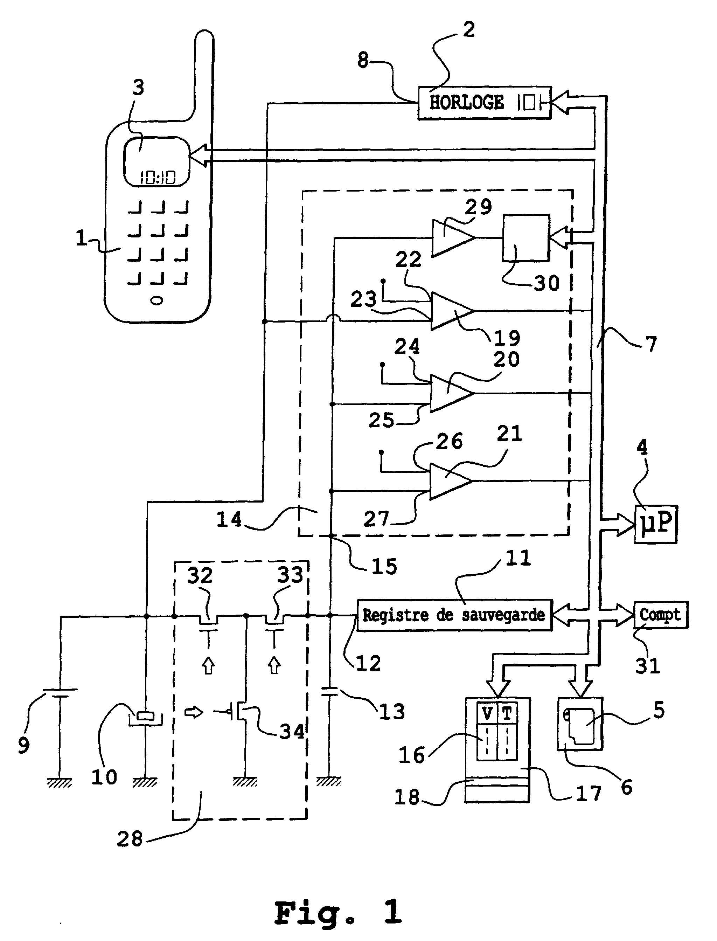

La figure 1 montre un téléphone mobile 1 selon l'invention. Ce téléphone mobile 1 comporte une horloge 2 et un afficheur 3. Il comporte en outre un microprocesseur 4 commandé par un programme 5 dans une mémoire de programme 6 par l'intermédiaire d'un bus 7 de commandes, de données et d'adresses. Le microprocesseur 4 met à jour une information présente sur l'afficheur 3, relative à une heure, en prélevant régulièrement une information produite par l'horloge 2. Généralement, le microprocesseur 4 prélève une information par minute. L'horloge 2 comporte une entrée 8 d'alimentation. Cette entrée 8 est reliée à un dispositif 9 d'alimentation. Généralement, le dispositif 9 est amovible, c'est à dire qu'il peut être séparé du téléphone mobile 1. Dans ce cas, l'horloge 2 n'est plus alimentée. Cependant, en parallèle sur la liaison entre le dispositif 9 et l'entrée d'alimentation 8, est relié un condensateur 10. Ce condensateur 10, généralement chimique, est utilisé comme dispositif d'alimentation d'appoint. Ainsi, lors d'une coupure de l'alimentation de l'horloge 2, par suppression du dispositif 9, le condensateur 10 se décharge. Généralement le dispositif 9 d'alimentation alimente tous les éléments du téléphone mobile 1. Ainsi le condensateur 10 permet de maintenir actif tous les éléments, ou tout du moins les plus importants tels que le microprocesseur 4, pendant quelques secondes après la coupure d'alimentation.

Le téléphone mobile 1 comporte un registre 11 de sauvegarde. Le registre 11 est un circuit de mémorisation réalisé, dans un exemple, à partir de bascules logiques. Lors d'une coupure de l'alimentation de l'horloge 2, le microprocesseur 4 prélève une information de l'horloge 2 par l'intermédiaire du bus 7 et place cette information dans le registre 11 de sauvegarde.

Le registre 11 comporte une entrée 12 d'alimentation reliée à un condensateur 13. Le condensateur 13 est relié d'autre part au dispositif 9 par l'intermédiaire d'un interrupteur (non représenté). Cet interrupteur, généralement un transistor, est commandé à la fermeture lorsque l'alimentation est présente. Lorsque l'alimentation est coupée l'interrupteur n'est plus commandé et est donc dans un état ouvert, un état ouvert étant un état où une circulation d'un courant électrique à travers l'interrupteur est interrompue. Le registre 11 consomme un très faible courant de l'ordre de quelques dizaines de nanoampères lors d'un fonctionnement en mode sauvegarde. Une durée de décharge du condensateur 13 est inversement proportionnelle à une valeur d'un courant fourni au registre 11. Dans l'invention la durée de décharge atteint plusieurs minutes.

Le téléphone mobile 1 comporte aussi un dispositif 14 de mesure. Ce dispositif 14 comporte une entrée 15 de mesure reliée à l'entrée 12 du registre 11. Pendant la coupure de l'alimentation le condensateur 13 se décharge. Durant la décharge le condensateur 13 fournit une tension suffisante pour assurer une sauvegarde intègre de l'information mémorisée dans le registre 11. Lors d'un retour de l'alimentation le dispositif 14, sur commande du microprocesseur 4, mesure une tension aux bornes du condensateur 13. L'évolution temporelle d'une décharge du condensateur 13 est connue. On peut ainsi déterminer une durée de décharge associée à une valeur de tension aux bornes du condensateur 13. Le programme 5 commande le microprocesseur 4 pour qu'il recompose une information d'horloge à partir de l'information mémorisée dans le registre 11 et de la durée calculée à partir de la valeur de tension aux bornes du condensateur 13. Une fois cette information d'horloge recomposée le microprocesseur 4 affiche sur l'afficheur 3 la valeur ainsi recomposée de l'horloge 2.

Pour déterminer une durée de décharge du condensateur 13 le téléphone mobile 1 comporte dans un exemple préféré une table 16 de couples de valeurs de deux coefficients V et T mémorisés dans une mémoire 17 de données du téléphone mobile 1. Le coefficient V représente une valeur de tension aux bornes du condensateur 13 après une durée de décharge T. Les couples de valeurs de coefficients V et T de la table 16 sont obtenus par mesure, à des instants réguliers dans un exemple préféré, d'une valeur de tension aux bornes du condensateur 13 lors d'une décharge de celui-ci. Ainsi, lors d'un retour de l'alimentation le dispositif 14 mesure une valeur de tension présente à cet instant aux bornes du condensateur 13. Le microprocesseur 4 lit cette valeur de tension et cherche dans la table 16 parmi les couples de coefficients V et T celui dont le coefficient V a une valeur égale à la valeur de la tension mesurée. Une fois le couple de valeurs de coefficients V et T identifié le microprocesseur 4 lit la valeur du coefficient T associé au coefficient V précédemment identifié.

Pour élaborer la table 16, V - T, pendant une durée de calibrage on reproduit fidèlement ce qui se produit pendant une sauvegarde réelle. On mesure notamment des tensions V à des dates T choisies d'avance. Les points de mesure sont ceux utilisés par le dispositif 14. La détermination de la table est alors empirique.

Dans le cas où aucune valeur du coefficient V ne correspond à la valeur de la tension mesurée, le microprocesseur 4 cherche les deux couples de valeurs de coefficients V et T dont des valeurs des coefficients V sont consécutives, la valeur de la tension mesurée se trouvant encadrée par les valeurs de ces deux coefficients V. Plusieurs solutions sont possibles pour calculer une valeur du coefficient T. Dans une solution préférée, on prend une décision. Cette décision consiste, pour le programme 5, à choisir un couple de valeurs dont un écart entre la valeur de la tension mesurée et la valeur du coefficient V correspondant est la plus faible. Une autre solution consiste à réaliser une interpolation linéaire. En effet dans ce cas on considère qu'une évolution de la tension de décharge entre deux valeurs consécutives de la tension est linéaire. Le programme 5 en déduit ainsi la valeur à donner au coefficient T pour cette valeur de tension mesurée.

La solution précédente, pour déterminer un couple de valeurs, présente l'inconvénient de nécessiter un emplacement mémoire de dimensions assez importantes. De plus, lorsqu'une valeur d'une tension mesurée aux bornes du condensateur n'est égale à aucune valeur des coefficients V de la table 16 alors une phase de décision est nécessaire.

Une deuxième solution préférée, pour déterminer une durée de décharge, consiste à mémoriser à un emplacement 18 de la mémoire de données 17 une expression à deux coefficients variables V et T d'une loi de variation temporelle d'une tension de décharge aux bornes du condensateur. On connaît une expression de la loi de variation temporelle d'un condensateur qui se décharge. Il s'agit d'une loi exponentielle décroissante. Les coefficients V et T ont la même signification que dans la première solution. Ainsi dans cette deuxième solution préférée le microprocesseur 4 exécute un traitement correspondant à cette expression mémorisée à l'emplacement 18. Ainsi, une tension mesurée aux bornes du condensateur 13 par le dispositif 14 est envoyée au microprocesseur 4 par l'intermédiaire du bus 7 et est appliquée à cette expression. Le résultat de ce traitement donne la valeur correspondante du coefficient T, cette valeur étant ensuite ajoutée au contenu du registre 11 puis placée dans l'horloge 2 afin de recomposer une information d'horloge juste.

Le dispositif 14 de mesure comporte, dans un exemple préféré, trois dispositifs 19, 20 et 21 de détection. Chaque dispositif 19 à 21 a pour fonction de comparer une tension mesurée aux bornes du condensateur 13 à une première, deuxième ou troisième tension de seuil respectivement. Une valeur de la troisième tension de seuil est inférieure à une valeur de la deuxième tension de seuil elle-même inférieure à une valeur de la première tension de seuil. Le dispositif 19 comporte deux entrées 22 et 23. Le dispositif 20 comporte deux entrées 24 et 25. Le dispositif 21 comporte deux entrées 26 et 27. L'entrée 23, du dispositif 19 est reliée aux bornes du condensateur 10. Les entrées 25 et 27 des dispositifs 20 et 21 respectivement sont reliées à l'entrée de mesure 15. Sur les entrées 22, 24 et 26 on applique la première, la deuxième et la troisième tension de seuil respectivement. Le dispositif 19 détecte si une coupure d'alimentation a eu lieu ou non et en informe le programme 5 par l'intermédiaire du bus 7 et du microprocesseur 4.

Un courant fourni par le condensateur 13 est très faible, de l'ordre de quelques dizaines de nanoampères. Cela implique que de tels courants sont très sensibles à des variations de température et dépendent du procédé de fabrication du condensateur 13. Ainsi le courant fourni par le condensateur 13 n'est pas connu et de plus deux registres de sauvegarde d'une même chaîne de fabrication n'ont pas exactement les mêmes caractéristiques. En conséquence, une évolution temporelle d'une décharge d'un condensateur 13 est différente d'une évolution temporelle d'une décharge d'un autre condensateur 13 d'un autre téléphone mobile. De plus, des caractéristiques du condensateur 13 sont modifiées au cours du temps ce qui crée une dérive notamment due à la température. C'est pourquoi, dans l'invention, on met à jour des valeurs des coefficients V et T de la table 16 ou de l'expression à l'emplacement mémoire 18 selon la solution choisie.

Pour obtenir cette mise à jour des couples de valeurs des coefficients V et T le microprocesseur 4 calcule, à des instants réguliers ou non, pour une décharge du condensateur 13 des nouvelles valeurs du coefficient T associées aux valeurs du coefficient V de la table 16. Cette phase de décharge du condensateur 13 correspond à une phase d'étalonnage. Pour que cette décharge soit la plus proche possible d'une décharge du condensateur 13 lorsque l'alimentation est supprimée, on relie le condensateur 13 au dispositif 9 par l'intermédiaire d'un dispositif 28 d'interrupteurs (en lieu et place de l'interrupteur précédent).

Dans le cas de la deuxième solution, on ne mesure que quelques valeurs afin de redéfinir une valeur de la constante de temps du circuit formé par le condensateur 13 et par une résistance équivalente constituée principalement à partir de la résistance d'entrée du registre 11. Pour ce faire, on détermine notamment une pente à l'origine, ou coefficient directeur, de l'expression de la loi de variation temporelle de la tension de décharge aux bornes du condensateur. Cette pente à l'origine constitue la pente de la partie linéaire de l'expression modélisant un début d'une décharge du condensateur 13.

Lors d'une phase d'étalonnage, on commande le dispositif 28 pour stopper une charge du condensateur 13 par le dispositif 9. Le condensateur 13 se décharge. Le dispositif 14 mesure une ou plusieurs valeurs de tension aux bomes du condensateur 13. Le dispositif 14 comporte un amplificateur 29 dont une entrée est reliée à l'entrée de mesure 15 et une sortie est reliée à un convertisseur 30 analogique numérique. Ce convertisseur 30 a pour fonction de transformer des signaux analogiques de tension mesurée par le dispositif 14 et de les transformer en des signaux numériques compréhensibles par le microprocesseur 4. L'amplificateur 29 a pour fonction de prélever une tension aux bornes du condensateur 13 sans perturber le signal prélevé en présentant notamment une impédance d'entrée de très forte valeur, généralement plus de 10 Mégohms. L'amplificateur 29 peut être supprimé dans le cas où le convertisseur 30 est capable de prélever une tension aux bornes du condensateur 13 sans en perturber un signal prélevé. Plusieurs méthodes de remise à jour de la table 16 sont possibles. En effet, soit on mesure une tension égale à une valeur de tension d'un coefficient V et on mesure la durée de décharge associée, soit on mesure une valeur d'une durée d'un coefficient T et à cette date on mesure une valeur de tension correspondante aux bornes du condensateur 13. Pour mesurer une valeur d'une durée d'un coefficient T le téléphone mobile 1 comporte un circuit 31 de comptage. Dans une solution préférée on mesure une valeur d'une durée d'un coefficient T et on mesure à cette date la valeur de la tension aux bomes du condensateur 13. On met ainsi à jour les valeurs des couples de coefficients V et T.

Le dispositif 28 comporte un premier interrupteur 32 relié par une première extrémité à une première borne de l'amplificateur 9. Il comporte aussi un deuxième interrupteur 33 dont une première extrémité est reliée à une deuxième extrémité du premier interrupteur 32 et dont une deuxième extrémité est reliée au condensateur 13. Il comporte en outre un troisième interrupteur 34 relié d'une part à la première extrémité du deuxième interrupteur 33 et d'autre part à une deuxième borne du dispositif 9. Dans un exemple préféré, le premier interrupteur 32 et le deuxième interrupteur 33 sont des interrupteurs normalement ouverts et le troisième interrupteur 34 est un interrupteur normalement fermé. Un interrupteur normalement ouvert ou normalement fermé est un interrupteur qui est, lorsque aucune commande ne lui est appliqué, bloqué ou passant respectivement. Dans un fonctionnement normal, c'est à dire lorsque l'alimentation est présente, le premier interrupteur 32 et le premier interrupteur 33 sont commandés, par le microprocesseur 4, à la fermeture, c'est à dire que le condensateur 13 est alimenté par le dispositif 9. Le troisième interrupteur 34 est commandé de manière complémentaire au premier interrupteur 32 et au deuxième interrupteur 33.

Lors d'une phase d'étalonnage, le troisième interrupteur 34 est commandé à la fermeture et le premier interrupteur 32 et le deuxième interrupteur 33 sont commandés à l'ouverture. Dans ce cas, le troisième interrupteur 34 crée un court-circuit entre la première extrémité du deuxième interrupteur 33 et la deuxième borne du dispositif 9. Cet état des interrupteurs 32 à 34 correspond à un état dans lequel les interrupteurs 32 à 34, se trouvent lorsque l'alimentation est supprimée. Ainsi une décharge du condensateur 13 pendant une phase d'étalonnage est réalisée dans les mêmes conditions que si l'alimentation était supprimée, cela permet ainsi de réaliser un étalonnage non faussé par la présence du dispositif 9.

Lorsque l'alimentation est réellement supprimée le dispositif 19 détecte le passage de la tension d'alimentation en dessous de la valeur de la première tension de seuil et indique au microprocesseur 4 que la tension d'alimentation est en train de décroître. Le microprocesseur 4 commande le premier interrupteur 32 et le deuxième interrupteur 33 à la fermeture afin de charger le condensateur 13. Il s'agit d'une phase d'initialisation qui évite que le condensateur ne soit déchargé au départ d'une phase de sauvegarde, notamment si la coupure intervient lors d'une phase d'étalonnage. La charge du condensateur 13 se fait de manière quasi instantanée c'est à dire pendant une durée inférieure à 1 milliseconde. Le microprocesseur 4 commande le premier interrupteur 32 et le deuxième interrupteur 33 à l'ouverture. Le condensateur 13 se décharge dans le registre 11. Le dispositif 20 détecte une tension de décharge du condensateur 13 inférieure à la deuxième tension de seuil. Lors de cette détection de la deuxième tension de seuil le microprocesseur 4 place dans le registre 11 l'information d'horloge contenue dans l'horloge 2. Ceci correspond au début du calcul de la durée de décharge.

Lors d'un rétablissement de l'alimentation le dispositif 19 détecte ce retour de l'alimentation et l'indique au microprocesseur 4. Ainsi le microprocesseur 4 lit en sortie du convertisseur 30 la valeur de la tension mesurée par le dispositif 14 aux bornes du condensateur 13. Dans la variante préférée, le microprocesseur 4 détermine ensuite la valeur du coefficient T en utilisant l'expression mémorisée à l'emplacement 18 de la mémoire 17 comme précédemment. La valeur de la durée ainsi déterminée est ajoutée au contenu du registre 11 de sauvegarde afin de recomposer l'information l'horloge. Cette information d'horloge est placée dans l'horloge 2 par le microprocesseur 4 et affichée sur l'afficheur 3 du téléphone mobile 1.

Si la coupure d'alimentation est trop longue, le dispositif 21 détecte, lors du retour de l'alimentation, qu'une tension mesurée est inférieure à une valeur de la troisième tension de seuil. Cela signifie que la valeur de tension aux bornes du condensateur est insuffisante pour mémoriser, de manière intègre, une valeur de l'information d'horloge. La mise à jour ne peut pas se faire automatiquement, elle doit être faite manuellement.

Les trois tensions de seuil ne sont rendues nécessaire que par la présence d'une phase d'étalonnage. Si tel n'était pas le cas, une seule tension de seuil serait nécessaire, celle permettant de détecter une coupure de l'alimentation et d'indiquer une date de départ pour la sauvegarde.

Dans un exemple préféré, les interrupteurs du dispositif interrupteurs sont des transistors de type MOSFET (Metal Oxyd Semiconductor Field Effect Transistor en anglais, transistor à effet de champ à semiconducteur oxyde métal en français), le premier interrupteur 32 et le deuxième interrupteur 33 étant réalisés d'une manière complémentaire avec le troisième interrupteur 34.

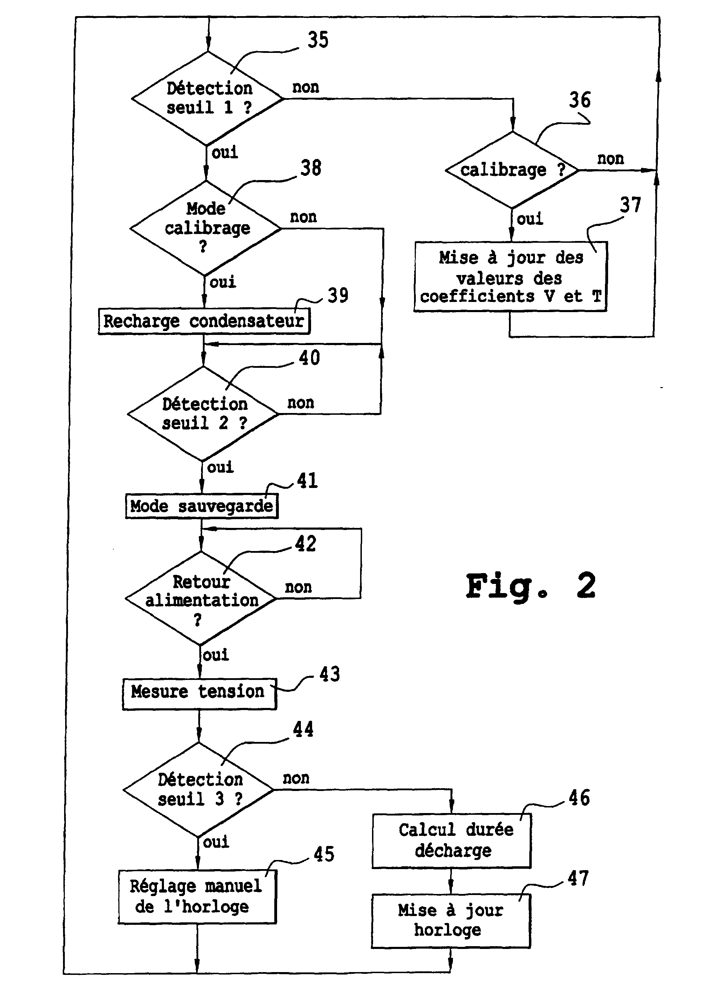

La figure 2 montre une représentation, sous une forme d'un algorithme, d'un fonctionnement du procédé de l'invention. Ainsi, pendant une première phase 35 le procédé de l'invention est en attente de détection d'une diminution de la valeur de la tension d'alimentation en dessous de la valeur de la première tension de seuil. Dans le cas où cette diminution n'est pas détectée ce qui correspond à une alimentation présente, le procédé entame une phase 36 pendant laquelle il décide de réaliser régulièrement ou non une phase 37 de mise à jour des coefficients des valeurs des coefficients V et T. Dans le cas où une diminution en dessous de la tension de seuil est détectée le procédé entre dans une phase 38 de test dans laquelle le microprocesseur 4 teste si on est dans une phase d'étalonnage ou non. Dans le cas où on est dans une phase d'étalonnage le procédé entame une étape 39 pendant laquelle il commande le premier interrupteur 32 et le deuxième interrupteur 33 à la fermeture. Puis le procédé se retrouve dans une étape 40 pendant laquelle on attend la détection d'un passage de la valeur de la tension aux bornes du condensateur 13 en dessous de la deuxième tension de seuil. Dans le cas où le microprocesseur 4 détecte que l'on n'est pas dans une phase d'étalonnage alors on passe de l'étape 38 à l'étape 40. Lorsqu'une diminution en dessous de la deuxième tension de seuil est détectée alors on entre dans une phase 41 qui indique un début du mode de sauvegarde.

Le mode de sauvegarde correspond à une phase de décharge du condensateur 13 pendant la coupure de l'alimentation. Le condensateur 13 se décharge pendant une phase 42 tant que le retour d'alimentation n'a pas eu lieu. On attend que le dispositif 19 détecte un passage d'une valeur de la tension aux bornes du condensateur 10 au-dessus de la première tension de seuil. Si tel est le cas le procédé se retrouve dans une étape 43 pendant laquelle le dispositif 14 mesure la tension aux bornes du condensateur 13. Cette mesure de tension est tout d'abord testée par le dispositif 21 pendant une phase 44. Pendant cette phase 44 le dispositif 21 teste si la tension aux bornes du condensateur 13 est inférieure à une valeur de la troisième tension de seuil. Si la réponse est affirmative, la durée de décharge a été trop longue et l'information placée dans le registre 11 n'a pas pu être sauvegardée. Ainsi le microprocesseur 4 indique dans une étape 45 par un message sur l'afficheur 3 du téléphone mobile 1 que l'heure n'a pas pu être sauvegardée. Dans le cas où le dispositif 21 ne détecte pas ce passage en dessous de la troisième tension de seuil alors le microprocesseur 4 entame une phase 46 de calcul pour déterminer une valeur du coefficient T en utilisant la table 16 ou l'expression mémorisée à l'emplacement 18 selon les cas. Une fois cette durée de décharge déterminée le microprocesseur 4, dans une étape 47 recompose une information d'horloge en ajoutant la durée au contenu du registre 11 afin de mettre à jour une information de l'horloge 2 et de l'afficheur 3.

## Revendications

1. Procédé de sauvegarde de l'heure dans un dispositif garde-temps comportant une horloge (2) reliée à un dispositif (9) d'alimentation, dans lequel on place une information d'horloge (2) dans un registre (11) de sauvegarde lors d'une coupure d'une alimentation de l'horloge (2), ce dispositif comportant en outre un condensateur (13), une entrée (12) d'alimentation du registre (11) de sauvegarde, ainsi qu'un dispositif (14) de mesure, ce procédé comprenant les étapes suivantes :
- une phase d'étalonnage dans laquelle
- on relie ledit condensateur (13) audit dispositif (9) d'alimentation pour effectuer une opération d'étalonnage faisant correspondre des durées de décharge du condensateur (13) et des valeurs de tension aux bomes du condensateur (13),
- une phase de sauvegarde de l'heure dans laquelle :
- le condensateur (13), connecté à ladite entrée (12) d'alimentation du registre (11) de sauvegarde, est déchargé pendant une coupure de l'alimentation,
- on mesure, avec ledit dispositif (14) de mesure, une valeur de tension aux bomes du condensateur (13) lors d'un retour de l'alimentation,
- on détermine une durée de décharge associée, lors de la phase d'étalonnage, à la valeur de tension mesurée,
- on recompose une information d'horloge avec la durée de décharge et l'information d'horloge mémorisée dans le registre (11) de sauvegarde,
**caractérisé en ce que** :
- on utilise ledit procédé dans le cadre d'un téléphone mobile (1) en tant que dispositif garde-temps et
- on relie ledit condensateur (13) audit dispositif (9) d'alimentation par l'intermédiaire d'un dispositif (28) d'interrupteurs.

2. Procédé selon la revendication 1 **caractérisé en ce que** pour déterminer une durée de décharge :
- on mémorise dans une mémoire (17) du téléphone mobile (1) une table de couples de valeurs de deux coefficients V et T représentant une tension après une décharge du condensateur (13) et une durée de décharge du condensateur (13) respectivement,
- on lit dans la table (16) une valeur du coefficient T d'un couple de valeurs de deux coefficients V et T dont une valeur du coefficient V correspond à une valeur de tension mesurée.

3. Procédé selon la revendication 1 **caractérisé en ce que** pour déterminer une durée de décharge :
- on fait exécuter à un microprocesseur (4) un traitement correspondant à une expression à deux coefficients variables V et T d'une loi de variation temporelle d'une tension de décharge aux bomes du condensateur, une valeur du coefficient variable V représentant une valeur de la tension de décharge et une valeur du coefficient variable T représentant une valeur d'une durée associée à cette tension de décharge.

4. Procédé selon l'une des revendications 1 à 3 **caractérisé en ce que**
- on mesure une tension de décharge aux bornes du condensateur (13).
- on compare cette tension de mesure à une première tension de seuil et on détecte une coupure d'alimentation,
- on compare cette tension de mesure à une deuxième tension de seuil, de valeur inférieure à la première tension de seuil, et on détecte un début de décharge
- on compare cette tension de mesure à une troisième tension de seuil, de valeur inférieure à la deuxième tension de seuil, et on détecte une tension minimale applicable au registre (11) de sauvegarde.

5. Procédé selon l'une des revendications 1 à 4 **caractérisé en ce que** pour effectuer l'étalonnage :
- on commande le dispositif (28) d'interrupteurs pour arrêter une charge du condensateur (13),
- on décharge le condensateur (13),
- on mesure pour une ou plusieurs valeurs de tension données une ou plusieurs durées de décharge du condensateur (13),
- on met à jour des valeurs des coefficients V et T.

6. Dispositif garde-temps pour la mise en oeuvre du procédé selon l'une des revendications 1 à 5 comportant :
- une horloge (2) reliée à un dispositif (9) d'alimentation ;
- un registre (11) de sauvegarde pour y placer une information d'horloge (2) lors d'une coupure de l'alimentation de l'horloge (2), comportant en outre
- une entrée (12) d'alimentation de ce registre (11) reliée à un condensateur (13) ;
- un dispositif (14) de mesure, ainsi que
- des moyens pour effectuer ladite phase d'étalonnage, et
- des moyens pour effectuer ladite phase de sauvegarde de l'heure,
**caractérisé en ce que** :
- ledit dispositif garde-temps est un téléphone mobile (1) et
- ledit condensateur (13) est relié audit dispositif (9) d'alimentation par l'intermédiaire d'un dispositif (28) d'interrupteurs.

7. Dispositif garde-temps selon la revendication 6 **caractérisé en ce que** le dispositif (28) d'interrupteurs comporte un premier interrupteur (32), relié par une première extrémité à une première borne du dispositif d'alimentation, un deuxième interrupteur (33), dont une première extrémité est reliée à une deuxième extrémité du premier interrupteur et dont une deuxième extrémité est relié au condensateur (13), et un troisième interrupteur (34) relié d'une part à la première extrémité du deuxième interrupteur (33) et d'autre part à une deuxième borne du dispositif (9) d'alimentation.

8. Dispositif garde-temps selon l'une des revendications 6 ou 7 **caractérisé en ce que** les interrupteurs (32, 33, 34) sont des transistors, de préférence à effet de champ.

## Patentansprüche

1. Verfahren zum Speichern der Uhrzeit in einer Zeitmessvorrichtung mit einem an eine Speisevorrichtung (9) angeschlossenen Taktgeber (2), bei der im Falle einer Unterbrechung der Stromversorgung eine Taktgeberinformation (2) in einem Speicherregister (11) abgelegt wird, und einem Kondensator (13), einem Speiseeingang (12) für das Speiseregister (11) sowie einer Messvorrichtung (14), welches Verfahren folgende Schritte umfasst:
- eine Kalibrierphase, bei welcher
- der besagte Kondensator (13) mit der besagten Speisevorrichtung verbunden wird, um einen Kalibriervorgang durchzuführen, der Entladedauern des Kondensators (13) mit den an Klemmen des Kondensators (13) anliegenden Spannungswerten in Übereinstimmung bringt,
- einer Uhrzeitspeicherphase, bei welcher
- der an den besagten Speiseeingang (12) des Speicheregisters (11) angeschlossene Kondensator (13) im Falle einer Unterbrechung der Stromversorgung entladen wird,
- mit der besagten Messvorrichtung (14) bei Wiederherstellung der Stromversorgung an den Klemmen des Kontensators (13) ein Spannungswert gemessen wird,
- eine bei der Kalibrierphase dem gemessenen Spannungswert zugeordnete Entladedauer bestimmt wird,
- eine Taktgeberinformation anhand der Entladedauer und der gespeicherten Taktgeberinformation neu gesetzt wird,
**dadurch gekennzeichnet,**
- **dass** das besagte Verfahren im Rahmen eines Mobiltelefons (1) als Zeitmessvorrichtung eingesetzt wird und
- **dass** der besagte Kondensator (13) über eine Schaltervorrichtung (28) mit der besagten Speisevorrichtung (9) verbunden wird.

2. Verfahren nach Anspruch 1, **dadurch gekennzeichnet, dass** zur Bestimmung einer Entladedauer
- in einem Speicher (17) des Mobiltelefons (1) eine Tabelle mit Wertepaaren von zwei Koeffizienten V und T, die jeweils eine Spannung nach einer Entladung des Kondensators (13) und eine Entladedauer des Kondensators (13) darstellen, gespeichert wird,
- in der Tabelle (16) ein Wert des Koeffizienten T eines Wertepaares von zwei Koeffizienten V und T abgelesen wird, wobei ein Wert des Koeffizienten V einem gemessenen Spannungswert entspricht.

3. Verfahren nach Anspruch 1, **dadurch gekennzeichnet, dass** zur Bestimmung einer Entladedauer
- von einem Mikroprozessor (4) eine Prozedur durchgeführt wird, welche einem Ausdruck bestehend aus zwei variablen Koeffizienten V und T eines Zeitverlaufs einer Entladespannung an den Klemmen des Kondensators entspricht, wobei ein Wert des variablen Koeffizienten V einen Wert der Entladespannung und ein Wert des variablen Koeffizienten T einen Wert einer dieser Entladespannung zugeordneten Dauer darstellt.

4. Verfahren nach einem der Ansprüche 1 bis 3, **dadurch gekennzeichnet,**
- **dass** an den Klemmen des Kondensators (13) eine Entladespannung gemessen wird,
- **dass** diese Messspannung mit einer ersten Schwellenspannung verglichen und eine Unterbrechung der Stromversorgung erfasst wird,
- **dass** diese Messspannung mit einer zweiten Schwellenspannung verglichen wird, die niedriger ist als die erste Schwellenspannung, und ein Entladebeginn erfasst wird,
- **dass** diese Messspannung mit einer dritten Schwellenspannung vergleichen wird, die niedriger ist als die zweite Schwellenspannung, und eine an das Speicherregister (11) anlegbare Mindestspannung erfasst wird.

5. Verfahren nach einem der Ansprüche 1 bis 4, **dadurch gekennzeichnet, dass** zur Durchführung der Kalibrierung
- die Schaltervorrichtung (28) angesteuert wird, um die Entladung des Kondensators (13) zu unterbrechen,
- dass der Kondensator (13) entladen wird,
- dass bei einer oder mehreren gegebenen Spannungswerten eine oder mehrere Entladungen des Kondensators (13) gemessen werden,
- dass die Werte der Koeffizienten V und T aktualisiert werden.

6. Zeitmessvorrichtung zur Durchführung des Verfahrens nach einem der Ansprüche 1 bis 5 mit
- einem an eine Speisevorrichtung (9) angeschlossenen Taktgeber (2),
- einem Speicherregister (11), in dem bei Unterbrechung der Stromversorgung eine Taktgeberinformation des Taktgebers (2) abgelegt wird, und mit
- einem an den Kondensator (13) angeschlossenen Speiseeingang (12) zur Speisung des Registers (11),
- einer Messvorrichtung (14) sowie
- Mitteln zur Durchführung der besagten Kalibrierphase und
- Mitteln zur Durchführung der besagten Uhrzeitspeicherphase,
**dadurch gekennzeichnet,**
- **dass** die besagte Zeitmessvorrichtung ein Mobiltelefon (1) ist und
- **dass** der besagte Kondensator (13) über eine Schaltervorrichtung (28) mit der besagten Speisevorrichtung (9) verbunden ist.

7. Zeitmessvorrichtung nach Anspruch 6, **dadurch gekennzeichnet, dass** die Schaltervorrichtung (28) einen ersten Schalter (32) aufweist, welcher an einem ersten Ende mit einer ersten Klemme der Speisevorrichtung verbunden ist, und einen zweiten Schalter (33), von dem ein erstes Ende mit einem zweiten Ende des ersten Schalters und von dem ein zweites Ende mit dem Kondensator (13) verbunden ist, und einen dritten Schalter (34), der einerseits mit dem ersten Ende des zweiten Schalters (33) und andererseits mit der zweiten Klemme der Speisevorrichtung (9) verbunden ist.

8. Zeitmessvorrichtung nach einem der Ansprüche 6 oder 7, **dadurch gekennzeichnet, dass** die Schalter (32, 33, 34) Transistoren, vorzugsweise Feldeffekttransistoren, sind.

## Claims

1. A process for safeguarding the time in a timekeeper device comprising a clock (2) connected to a power supply device (9) in which clock (2) information is placed in a safeguarding register (11) during an interruption in power to the clock (2), this device in addition comprising a capacitor (13), and a power supply input (12) for the safeguarding register (11), as well as a measuring device (14), this process comprising the following steps:
- a calibration phase wherein
- said capacitor (13) is connected to said power supply device (9) for performing a calibration operation to make the duration of discharge of the capacitor (13) correspond to the magnitude of voltage to the capacitor (13) terminals,
- a time safeguarding phase wherein:
- the capacitor (13), connected to said power supply input (12) of the safeguarding register (11), is discharged during a power interruption,
- the magnitude of voltage to the capacitor (13) terminals is measured with said measuring device (14) when the power returns,
- the associated duration of discharge to the measured magnitude of voltage is determined during the calibration phase,
- the clock information is reset to the duration of discharge and the clock information stored in the safeguarding register (11),
**characterized in that**:
- said process is utilized as a part of a mobile telephone (1) as a timekeeper device and
- said capacitor (13) is connected to said power supply device (9) through a cut-off switch (28).

2. The process according to claim 1 **characterized in that** for determining a duration of discharge:
- a table of pairs of values of two coefficients V and T is stored in a memory (17) of mobile telephone (1), these coefficients represent a voltage following a capacitor (13) discharge and a duration of discharge of the capacitor (13) respectively,
- a value of the coefficient T of a pair of values of two coefficients V and T is read in the table (16), wherein one value of the coefficient V corresponds to one value of the measured voltage.

3. The process according to claim 1 **characterized in that** for determining the duration of discharge:
- processing must be executed by a microprocessor (4), this processing corresponding to an expression of two variable coefficients V and T of a temporal law of variation for a discharge voltage to the capacitor terminals, a value of the variable coefficient V representing a value of the discharge voltage and a value of the variable coefficient T representing a value of a duration associated with this discharge voltage.

4. The process according to one of claims 1 to 3
**characterized in that**
- the discharge voltage to the capacitor (13) terminals is measured,
- this measured voltage is compared to a first threshold voltage and a power interruption is detected,
- this measured tension is compared to a second threshold voltage, with a value lower than the first threshold voltage, and a start of discharge is detected
- this measured voltage is compared to a third threshold voltage, with a value lower than the second threshold voltage, and a minimal voltage applicable to the safeguarding register (11) is detected.

5. The process according to one of claims 1 to 4 **characterized in that** for performing a calibration:
- the cut-off switch (28) is ordered to stop a capacitor (13) charge,
- the capacitor (13) is discharged,
- one or several durations of discharge of the capacitor (13) is/are measured for one or several given magnitudes of voltage,
- the values of coefficients V and T are updated.

6. The safeguarding device for implementing the process according to one of claims 1 to 5 comprising:
- a clock (2) connected to a power supply device (9);
- a safeguarding register (11) for placing clock (2) information there during an interruption of power to the clock (2), comprising in addition
- a power supply input (12) for this register (11) connected to a capacitor (13);
- a measuring device (14), as well as
- means for performing said calibration phase, and
- means for performing said time safeguarding phase,
**characterized in that**:
- said timekeeper device is a mobile telephone (1) and
- said capacitor (13) is connected to said power supply device (9) through a cut-off switch (28).

7. The timekeeper device according to claim 6 **characterized in that** the cut-off switch (28) comprises a first switch (32), connected by a first end to a first terminal of the power supply device, a second switch (33), wherein a first end is connected to a second end of the first switch and wherein a second end is connected to the capacitor (13), and a third switch (34) connected on the one hand to a first end of the second switch (33) and on the other hand to a second terminal of the power supply device (9).

8. The timekeeper device according to one of claims 6 or 7 **characterized in that** the switches (32, 33, 34) are transistors, preferably field effect transistors.
